# EUROPÄISCHE PATENTSCHRIFT

(11) **EP 0 892 181 B1**
(45) Veröffentlichungstag und Bekanntmachung des Hinweises auf die Patenterteilung: **08.11.2000**
(21) Anmeldenummer: 98810592.0
(22) Anmeldetag: 26.06.1998
(51) Int. Cl.: F16B 13/12

(54) **Spreizdübel**
Expansion dowel
Cheville à expansion

(30) Priorität: 18.07.1997 DE 19730843
(43) Veröffentlichungstag der Anmeldung: 20.01.1999
(73) Patentinhaber: HILTI Aktiengesellschaft, 9494 Schaan (LI)
(72) Erfinder: Mayr, Franz-Paul, 86949 Hechenwang (DE)
(74) Vertreter: Wildi, Roland

(56) Entgegenhaltungen:
- EP-A- 0 282 411
- EP-A- 0 757 185

## Beschreibung

Die Erfindung betrifft einen Spreizdübel, insbesondere einen Schlagspreizdübel, gemäss dem Oberbegriff des Patentanspruchs 1.

Eine an Spreizdübel gestellte Forderung ist deren einfache Setzbarkeit. Diese Forderung wird vor allem von bekannten Spreizdübeln erfüllt, deren Setzvorgang durch Schlagspreizung erfolgt. Derartige Schlagspreizdübel umfassen einen hülsenförmigen Dübelkörper aus Stahl mit einem Längsschlitze aufweisenden Spreizbereich. Ein vorzugsweise aus Stahl bestehendes Spreizelement ist in einer sich in Setzrichtung konisch verjüngenden Zentralbohrung axial verschiebbar gehalten. Zur Verspreizung des hülsenförmigen Dübelkörpers im Bohrloch eines Aufnahmematerials, wie beispielsweise Beton, Mauerwerk und dergleichen, wird das Spreizelement vorzugsweise unter axialer Schlageinwirkung in den sich verjüngenden Abschnitt der Zentralbohrung vorgetrieben. Diese bekannten Spreizdübel sind relativ teuer in der Herstellung. Sie weisen einen grossen Materialaufwand auf und insbesondere ist die Herstellung der sich verjüngenden Zentralbohrung relativ aufwendig.

Aus der EP-A-0 171 354 ist ein auf demselben Verankerungsprinzip basierender Spreizdübel bekannt, der sich durch eine einfachere Herstellbarkeit auszeichnet. Der Spreizdübel umfasst einen hülsenförmigen Dübelkörper mit einem längsgeschlitzten Verankerungsbereich und ein einstückig mit dem Dübelkörper verbundenes Spreizelement in Form eines Wendelkörpers. Das Spreizelement ist in der Zentralbohrung des hülsenförmigen Dübelkörpers angeordnet und durch axiale Stauchung radial aufweitbar. Infolge des radialen Aufweitens des Spreizelements wird der Spreizbereich des hülsenförmigen Dübelkörpers gespreizt und der Spreizdübel wird in der Bohrung verankert. Der hülsenförmige Dübelkörper und das einstückig angeformte Spreizelement sind aus einem Blechstanzbiegeteil gefertigt. Während ein derartig ausgebildeter Spreizdübel gegenüber den aus Massivmaterial hergestellten Schlagspreizdübeln aus herstellungstechnischer Sicht von Vorteil ist, besteht doch die Gefahr, dass das wendelförmige Spreizelement beim axialen Stauchen radial nach innen ausweicht. Dies kann dazu führen, dass der hülsenförmige Dübelkörper radial nur unzureichend aufgespreizt wird und der Spreizdübel nicht die geforderten Lastwerte erreicht.

Aufgabe der vorliegenden Erfindung ist es daher, einen Spreizdübel, der gattungsgemässen Art dahingehend zu modifizieren, dass den geschilderten Nachteilen abgeholfen wird und ein zuverlässiges Aufspreizen des hülsenförmigen Dübelkörpers gewährleistet ist, um die geforderten Lastwerte zu erzielen. Dabei soll der Spreizdübel einfach und kostengünstig in der Herstellung sein.

Die Lösung dieser Aufgaben besteht in einem Spreizdübel mit den im kennzeichnenden Abschnitt angeführten Merkmalen. Der durch die Erfindung geschaffene Spreizdübel ist insbesondere vom Typ eines Schlagspreizdübels und umfasst einen mit einer Durchgangsbohrung ausgestatteten hülsenförmigen Dübelkörper, der einen mit Längsschlitzen versehenen Spreizbereich besitzt und an seinem dem Spreizbereich gegenüberliegenden rückwärtigen Abschnitt Lastangriffsmittel, vorzugsweise ein Innengewinde, aufweist. Ein Spreizelement ist in der Durchgangsbohrung gehalten und unter radialem Aufweiten des Spreizbereichs in der Durchgangsbohrung axial verschiebbar. Das Spreizelement ist ein Blechstanzbiegeteil, das zu einem kompakten Körper gerollt ist und wenigstens bereichsweise gegenüber der Durchgangsbohrung im Spreizbereich ein Übermass aufweist. Indem das Spreizelement aus einem Blechstanzbiegeteil besteht, das zu einem kompakten Körper gerollt ist, kann es beim Eintreiben in die Durchgangsbohrung des Spreizbereichs nicht mehr radial ausweichen. Dadurch ist. gewährleistet, dass der Spreizbereich im erforderlichen Ausmass aufgespreizt wird, um dem Spreizdübel die erforderlichen Lastwerte zu verleihen. Das Spreizelement verhält sich mechanisch wie ein Massivteil und ist dabei einfach und kostengünstig in der gewünschten Form herstellbar.

In einer vorteilhaften Variante der Erfindung ist das Spreizelement einstückig an den hülsenförmigen Dübelkörper angeformt. Auf diese Weise ausgebildet, können das Spreizelement und der Dübelkörper aus zusammenhängenden Blechstanzbiegeteilen bestehen, was sich besonders vorteilhaft auf die Fertigungskosten auswirkt. Gesonderte Massnahmen, die ein Herausfallen des Spreizelements aus der Durchgangsbohrung des Dübelkörpers verhindern, können entfallen, da das Spreizelement verliersicher mit dem Dübelkörper verbunden ist. Im Verbindungsbereich ist eine Sollbruchstelle angeordnet, die beim schlagenden Vortreiben des Spreizelements abgeschert wird.

Durch Faltung des Blechstanzbiegeteils erhält der Spreizbereich des hülsenförmigen Dübelkörpers eine grössere Wandstärke als der rückwärtige Abschnitt. Durch diese Massnahme wird der grösseren Druckbeanspruchung des Dübelkörpers im Spreizbereich Rechnung getragen. Durch die Faltung des Blechstanzbiegeteils wird der Durchmesser der Durchgangsbohrung im Spreizbereich gegenüber dem Innendurchmesser im rückwärtigen Abschnitt des Dübelkörpers verringert. Dies wird durch Faltung nach innen erzielt und kann durch radiales Zusammenpressen des Spreizbereichs verstärkt sein.

In einer Ausführungsvariante der Erfindung besitzt das Spreizelement eine im wesentlichen zylindrische Aussenkontur. Der Aussendurchmesser des Spreizelements ist etwa 0,5 mm bis etwa 1,5 mm grösser als der Durchmesser der Durchgangsbohrung im Spreizbereich. Bei den gewählten Durchmesserverhältnissen stehen die erforderlichen Eintreibkräfte und die erzielbaren Lastwerte in einem ausgewogenen Verhältnis.

Indem die Durchgangsbohrung im Spreizbereich in Setzrichtung verjüngt ausgebildet ist, werden die grössten Spreizkräfte im bohrlochtiefsten Bereich des Bohrlochs auf die umgebende Bohrungswandung ausgeübt. In den oberflächennahen Bereichen des Untergrunds treten nur mehr geringe oder keine Spreizkräfte auf; dadurch wird das Material des Untergrunds geschont und wird ein Versagen im oberflächennahen Bereich verhindert. Herstellungstechnisch ist die Verjüngung der Durchgangsbohrung besonders einfach durch Prägen der gefalteten Abschnitte des Blechstanzbiegeteils vor dem Rollen des Dübelkörpers durchführbar.

In einer Variante der Erfindung ist das Spreizelement wenigstens bereichsweise mit einer sich in Setzrichtung konisch verjüngenden Aussenkontur versehen. Das Spreizelement mit konischer Aussenkontur kann in Verbindung mit zylindrischen oder konisch verjüngenden Durchgangsbohrungen eingesetzt werden. Der Vorteil der konischen Aussenkontur liegt insbesondere im leichteren Eindringen in die durchmesserkleinere Durchgangsbohrung im Spreizbereich des Dübelkörpers.

Zur Erleichterung des Vortreibens des Spreizelements in den Spreizbereich kann am Übergang vom rückwärtigen Abschnitt zum Spreizbereich des Dübelkörpers in der Durchgangsbohrung eine im wesentlichen trichterförmige Schlupffase für das Spreizelement vorgesehen sein.

Das Spreizelement kann an seiner den Lastangriffsmitteln zugewandten Seite mit einem mittig abragenden Zapfen ausgestattet sein. In hochfestem Beton überschreitet der Reibungswiderstand zwischen der Innenwandung der Durchgangsbohrung und dem Spreizelement den Reibungswiderstand zwischen den Wicklungen des kompakt gewickelten Spreizelements. Dadurch wird der Zapfen in das kompakt gewickelte Spreizelement eingetrieben. Dies sorgt für eine Verstärkung des in Setzrichtung vorderen Bereichs des Spreizelements. Durch das Einschlagen des Zapfens kann das Setzgerät im erforderlichen Ausmass in den Dübelkörper eindringen und kann an der Stirnseite des Dübelkörpers eine Setzmarkierung angebracht werden.

In einer vorteilhaften Variante der Erfindung weist der Dübelkörper im Spreizbereich eine im wesentlichen dreieckförmige Aussenkontur mit konvex gekrümmten Aussenseiten auf. Der Spreizbereich ist durch drei axiale Schlitze in Spreizabschnitte geteilt. Die gewählte Geometrie erweist sich bezüglich der Anpassung an die Bohrlochgeometrie von Vorteil. Dabei wird eine möglichst grosse Fläche für die Verspreizung aufrechterhalten.

Zur Erzielung einer stabilen Verankerung erweist es sich von Vorteil, wenn die axiale Länge des Spreizelements der Gesamtlänge des Dübelkörpers vermindert um die axiale Erstreckung des Innengewindes entspricht. Bei den gewählten Abmessungsverhältnissen zwischen Spreizelement und Dübelkörper ist die erforderliche Bohrlochtiefe optimiert. Es wird der gesamte Spreizbereich für die Verankerung des Spreizdübels genützt.

Im folgenden wird die Erfindung unter Bezugnahme auf in den schematischen Zeichnungen dargestellte Ausführungsbeispiele näher erläutert. Es zeigen in unterschiedlichen Massstäben:
- Fig. 1: ein erstes Ausführungsbeispiel des erfindungsgemässen Spreizdübels im Längsschnitt;
- Fig. 2: eine Abwicklung des Spreizsegments aus Fig. 1;
- Fig. 3: ein zweites Ausführungsbeispiel des erfindungsgemässen Spreizdübels im Längsschnitt;
- Fig. 4: eine Abwicklung des Spreizdübels gemäss Fig. 3;
- Fig. 5: ein drittes Ausführungsbeispiel des erfindungsgemässen Spreizdübels im Längsschnitt;
- Fig. 6: eine Abwicklung des Spreizdübels gemäss Fig. 5;
- Fig. 7: eine weitere Variante des erfindungsgemässen Spreizdübels; und
- Fig. 8: eine Ansicht des Spreizbereichs des Dübelkörpers gemäss Pfeil VII in Fig. 5.

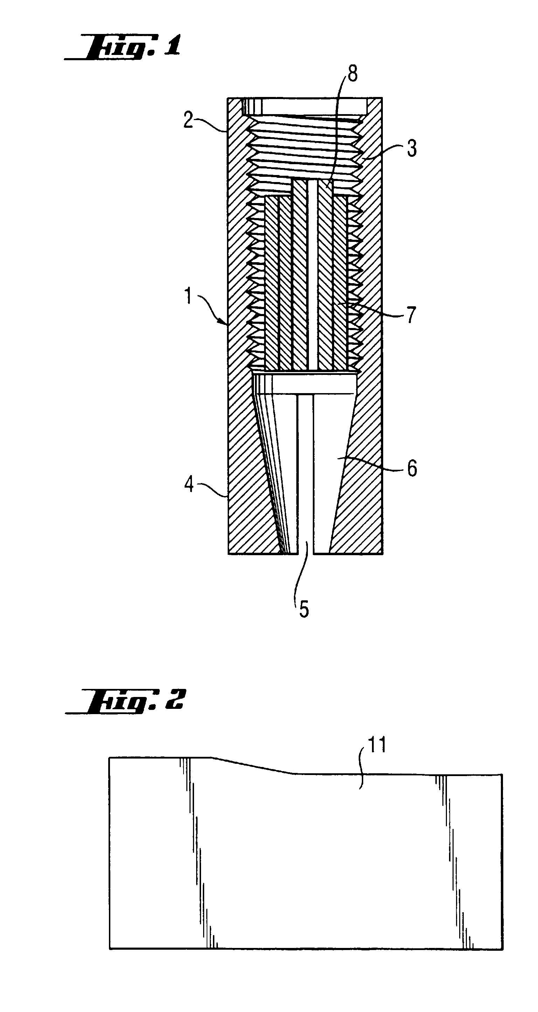

Das in Fig. 1 dargestellte, erste Ausführungsbeispiel des erfindungsgemässen Spreizdübels umfasst einen hülsenförmigen Dübelkörper 1 mit einer Durchgangsbohrung 6. Im rückwärtigen Abschnitt 2 des Dübelkörpers 1 ist ein Lastangriffsmittel 3, beispielsweise ein Innengewinde, vorgesehen. Der Dübelkörper 1 weist einen mit Längsschlitzen 5 versehenen Spreizbereich 4 auf. Gemäss dem dargestellten Ausführungsbeispiel verjüngt sich die Durchgangsbohrung 6 im Spreizbereich 4 zum Vorderende des Dübelkörpers 1. Der Dübelkörper 1 kann beispielsweise in einem Kaltumformprozess in die gewünschte Form gebracht werden.

In der Durchgangsbohrung 6 ist ein Spreizelement 7 angeordnet, das aus einem kompakt gewickelten Blechstanzbiegeteil besteht, das in Fig. 2 dargestellt ist und gesamthaft mit dem Bezugszeichen 11 versehen ist. Das Spreizelement 7 weist eine im wesentlichen zylindrische Aussenkontur auf. Von der rückwärtigen Stirnfläche des Spreizelements ragt etwa mittig ein Zapfen 8 ab. Der Zapfen 8 wird durch den Zuschnitt des Blechstanzbiegeteils 11 hergestellt, indem es, wie in Fig. 2 angedeutet, über seine Längserstreckung eine unterschiedliche Breite aufweist. Die mittige Anordnung des Zapfens 8 wird dadurch erreicht, dass zum Wickeln des Spreizelements 7 an dem breiteren Ende des Blechstanzbiegeteils 11 begonnen wird.

Zum Aufweiten des Spreizbereichs 4 wird das Spreizelement 7, wie üblich, durch axiale Schläge in die sich verjüngende Durchgangsbohrung 6 vorgetrieben. Das kompakt gewickelte Spreizelement 7 verhält sich dabei wie die bekannten massiven Metallteile; insbesondere kann wegen der Kompaktheit der Wicklungen das Blechmaterial nicht radial nach innen ausweichen.

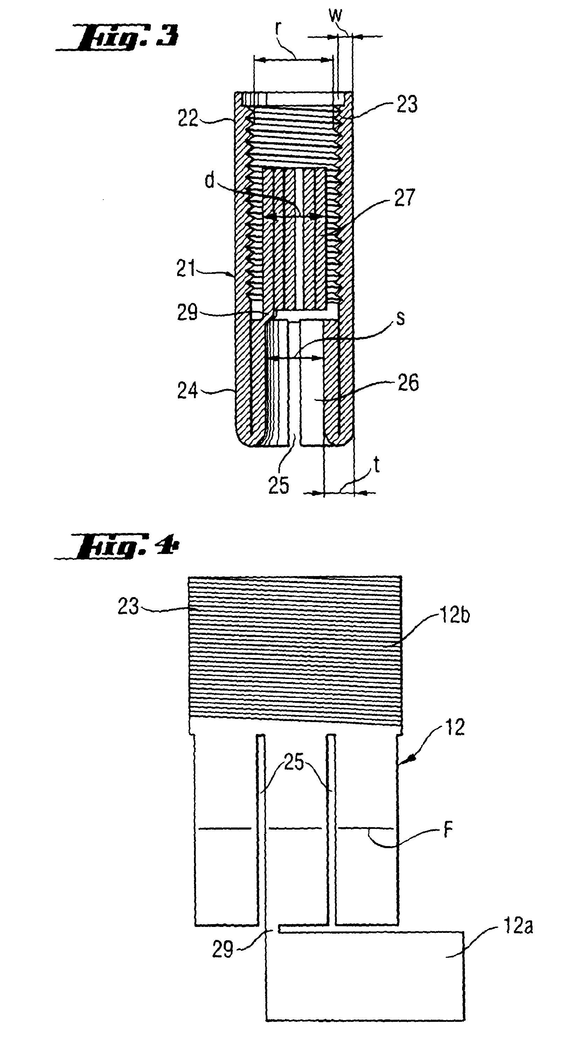

Fig. 3 und 4 zeigen ein zweites Ausführungsbeispiel des erfindungsgemässen Spreizdübels. Merkmale, die den Merkmalen aus Fig. 1 ähnlich bzw. gleich ausgebildet sind, sind jeweils mit einem um 20 vergrösserten Bezugszeichen versehen. So ist der Dübelkörper beispielsweise mit 21, der rückwärtige Abschnitt mit 22, das Innengewinde mit 23 und der mit Längsschlitzen 25 ausgestattete Spreizbereich mit dem Bezugszeichen 24 versehen. Die Durchgangsbohrung trägt das Bezugszeichen 26. Das Spreizelement ist mit 27 bezeichnet und weist eine im wesentlichen zylindrische Aussenkontur auf. Die Besonderheit dieses Ausführungsbeispiels besteht darin, dass der Dübelkörper 21 und das Spreizelement 27 miteinander einstückig verbunden sind und im Verbindungsbereich eine Sollbruchstelle 29 aufweisen.

Wie aus der in Fig. 4 dargestellten Abwicklung ersichtlich ist, sind der Dübelkörper 21 und das Spreizelement 27 aus einem Blechstanzbiegeteil 12 gefertigt. Der den hülsenförmigen Dübelkörper 21 bildende Abschnitt des Blechstanzbiegeteils 12b ist im wesentlichen rechteckig ausgebildet. Der den späteren Spreizbereich 24 bildende Teil des Bleches 12b ist mit Längsschlitzen 25 versehen. In den späteren rückwärtigen Abschnitt 22 des Bleches ist die Kontur des späteren Gewindes 23 beispielsweise eingeprägt oder eingewalzt. Der das Spreizelement 27 bildende Abschnitt des Blechstanzbiegeteils 12 ist mit 12a bezeichnet. Er ist über einen Verbindungsbereich mit dem Dübelkörperabschnitt 12a verbunden und weist dort eine Sollbruchstelle 29 auf. Die Sollbruchstelle 29 kann beispielsweise durch eine Materialschwächung, eine Perforierung oder ähnliches hergestellt werden. Der das Spreizelement 27 bildende Blechabschnitt 12a weist eine rechteckige Form mit einer über seine Längserstreckung gleichbleibenden Breite auf. Demgemäss weist das kompakt gewickelte Spreizelement keinen abragenden Zapfen auf.

Wie aus Fig. 3 ersichtlich ist, besitzt der Dübelkörper 21 im Spreizbereich 24 eine Wandstärke t, die grösser ist als die Wandstärke w im mit dem Innengewinde 23 versehenen rückwärtigen Abschnitt 22. Dies wird durch Umfalten des den Dübelkörper 21 bildenden Abschnitts 12b des Blechstanzbiegeteils 12 erreicht. Die vorgesehene Faltstelle ist in Fig. 4 mit F bezeichnet. Die Durchgangsbohrung 26 ist im Spreizbereich 24 zylindrisch ausgebildet. Durch die Faltung des Materials weist die Durchgangsbohrung 26 im Spreizbereich 24 einen Durchmesser s auf, der kleiner ist als der Durchmesser r im rückwärtigen Abschnitt. Der Durchmesser s der Durchgangsbohrung 26 im Spreizbereich 24 ist kleiner als der Aussendurchmesser d des Spreizelements 27. Vorzugsweise beträgt der Unterschied der Durchmesser der Durchgangsbohrung 26 und des Spreizelements 27 etwa 0,5 mm bis 1,5 mm. Bei diesen Durchmesserunterschieden ist gewährleistet, dass das Spreizelement 27 in die Durchgangsbohrung 26 im Spreizbereich 24 des Dübelkörpers 21 vortreibbar ist und eine ausreichende radiale Aufweitung erreicht wird.

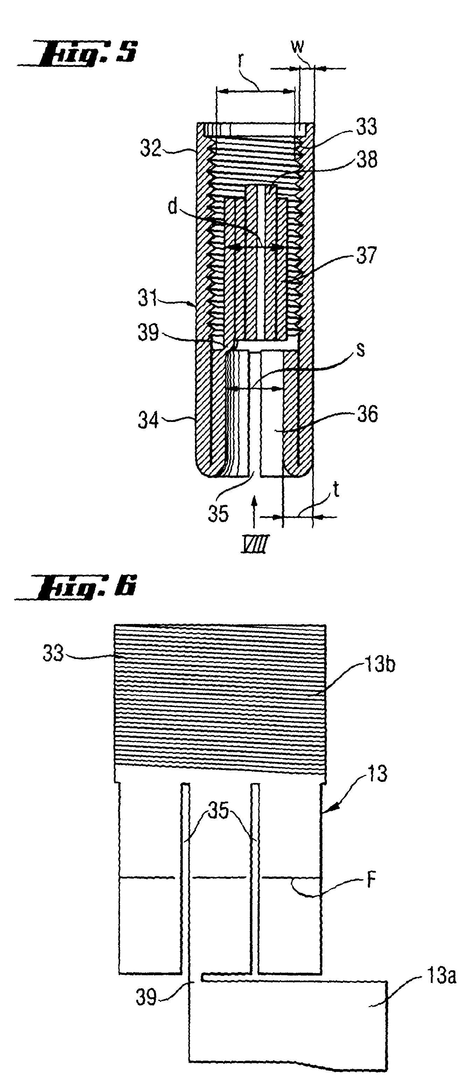

Das in Fig. 5 und 6 dargestellte dritte Ausführungsbeispiel des erfindungsgemässen Speizdübels entspricht weitgehend dem anhand von Fig. 4 und 5 erläuterten zweiten Ausführungsbeispiel. In Entsprechung zur Bezeichnungsweise des zweiten Ausführungsbeispiels sind gleiche oder ähnliche Merkmale mit um 30 erhöhten Bezugszeichen versehen. Der Dübelkörper ist somit mit 31 bezeichnet, die Durchgangsbohrung trägt das Bezugszeichen 36, usw. Der Unterschied zum zweiten Ausführungsbeispiel besteht darin, dass das Spreizelement 37 an seiner dem rückwärtigen Ende des Dübelkörpers 31 zugewandten Stirnfläche einen etwa mittig abragenden Zapfen 38 aufweist. Somit enspricht die Kontur des Spreizelements 37 dem mit dem Bezugszeichen 7 versehenen Spreizelement aus Fig. 1. Fig. 6 zeigt den Zuschnitt des für das dritte Ausführungsbeispiel erforderlichen Blechstanzbiegeteils 13. Die Abschnitte für den Dübelkörper 31 und das Spreizelement 37 sind mit den Bezugszeichen 13b bzw. 13a versehen. Die mit der Sollbruchstelle 39 versehene Verbindungsstelle ist angedeutet. Zum Wickeln des mit dem Zapfen 38 versehenen Spreizelements 37 wird an dem der Sollbruchstelle gegenüberliegenden, breiteren Ende des Blechteils 13a begonnen.

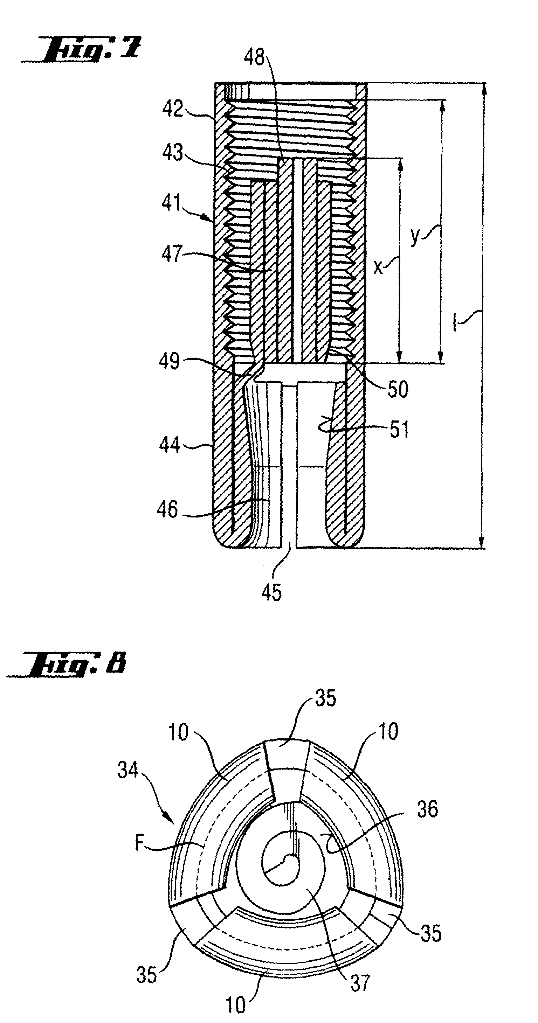

Fig. 7 zeigt ein weiteres Ausführungsbeispiel des erfindungsgemässen Spreizdübels. Der bisherigen Bezeichnung bei dem zweiten und dritten Ausführungsbeispiel folgend, sind gleiche oder ähnliche Merkmale mit um 40 erhöhten Bezugszeichen versehen. Somit bezeichnet 41 den Dübelkörper, 46 die Durchgangsbohrung, 47 das Spreizelement usw. Der Unterschied dieses Ausführungsbeispiels besteht darin, dass die Durchgangsbohrung 46 am Übergang vom rückwärtigen Abschnitt 42 zum Spreizbereich 44 des Dübelkörpers eine im wesentlichen trichterförmige Schlupffase 51 für das Spreizelement 47 aufweist. Die Schlupffase 51 kann beispielsweise durch Abprägen des umgefalteten Spreizbereichs 44 im noch nicht zusammengerollten Zustand des Dübelkörpers 41 erfolgen. Dabei erhält die Durchgangsbohrung 46 eine sich zum Vorderende verjüngende Form. Das Spreizelement 47, kann zylindrisch ausgebildet sein. Es kann auch, wie beispielsweise dargestellt, einen sich konisch verjüngenden Vorderabschnitt 50 aufweisen. In einer nicht näher dargestellten, alternativen Ausführungsvariante kann sich der konische Abschnitt über einen grösseren Bereich des Spreizelements erstrecken oder das Spreizelement kann auch gesamthaft konisch ausgebildet sein. Die axiale Länge x des Spreizelements 47 entspricht der Gesamtlänge I des Dübelkörpers 41, vermindert um die axiale Erstreckung y des Innengewindes 43.

Fig. 8 zeigt eine Ansicht des erfindungsgemässen Spreizdübels aus Fig. 5 gemäss dem Pfeil VIII. Durch die Durchgangsbohrung 36 fällt der Blick auf die vorlaufende Stirnseite des Spreizelements 37. Deutlich erkennbar ist die im wesentlichen dreieckförmige Gestalt des Spreizbereichs 34 mit konvex gekrümmten Aussenseiten. Der Spreizabschnitt 34 ist durch Längsschlitze 35 in drei Spreizabschnitte 10 geteilt. Die Faltlinie F, entlang der das Blechstanzbiegeteil im Spreizbereich gefaltet ist, ist strichliert angedeutet.

Der Setzvorgang der anhand der Fig. 3 bis 8 geschilderten Ausführungbeispiele des erfindungsgemässen Spreizdübels erfolgt, analog zu dem Ausführungsbeispiel gemäss Fig. 1 und 2, in an sich gewohnter Weise. Der Dübelkörper wird in eine vorbereitete Bohrung im Aufnahmematerial eingesetzt. Danach wird das Spreizelement durch axiale Schläge auf ein an das Spreizelement angesetztes Setzwerkzeug an der Sollbruchstelle vom Dübelkörper abgetrennt und in den Spreizbereich vorgetrieben, um diesen radial aufzuweiten und dadurch den Spreizdübel zu verankern.

## Patentansprüche

1. Spreizdübel, insbesondere Schlagspreizdübel, umfassend einen mit einer Durchgangsbohrung (6) ausgestatteten hülsenförmigen Dübelkörper (1; 21; 31; 41), der einen mit Längsschlitzen (5; 25; 35; 45) versehenen Spreizbereich (4; 24; 34; 44) besitzt und an seinem dem Spreizbereich (4; 24; 34; 44) gegenüberliegenden rückwärtigen Abschnitt (2; 22; 32; 42) Lastangriffsmittel (3; 23; 33; 43), vorzugsweise ein Innengewinde, aufweist, und ein Spreizelement (7; 27; 37; 47), das in der Durchgangsbohrung (6; 26; 36; 46) gehalten ist und unter radialem Aufweiten des Spreizbereichs (4; 24; 34; 44) in der Durchgangsbohrung (6; 26; 36; 46) axial verschiebbar ist, wobei das Spreizelement (7; 27; 37; 47) ein Blechstanzbiegeteil (11; 12a; 13a) ist, dadurch gekennzeichnet, dass das Blechstanzbiegeteil (11; 12a; 13a) zu einem kompakten Körper gerollt ist und wenigstens bereichsweise gegenüber der Durchgangsbohrung (6; 26; 36; 46) im Spreizbereich (4; 24; 34; 44) ein Übermass aufweist.

2. Spreizdübel nach Anspruch 1, dadurch gekennzeichnet, dass das Spreizelement (27; 37; 47) einstückig an den hülsenförmigen Dübelkörper (21; 31; 41) angeformt ist, wobei das Spreizelement (27; 37; 47) und der Dübelkörper (21; 31; 41) aus zusammenhängenden Blechstanzbiegeteilen (12a, 12b; 13a, 13b) bestehen und im Verbindungsbereich eine Sollbruchstelle (29; 39; 49) angeordnet ist.

3. Spreizdübel nach Anspruch 2, dadurch gekennzeichnet, dass der hülsenförmige Dübelkörper (21; 31; 41) im Spreizbereich (24; 34; 44) durch Faltung des Blechstanzbiegeteils (11b; 12b) eine grössere Wandstärke (t) aufweist als im rückwärtigen Abschnitt (22; 32; 42), wobei der Durchmesser (s) der Durchgangsbohrung (26; 36; 46) im Spreizbereich (24; 34; 44) gegenüber dem Innendurchmesser (r) im rückwärtigen Abschnitt (22; 32; 42) des Dübelkörpers (21; 31; 41) verringert ist.

4. Spreizdübel nach einem der vorangehenden Ansprüche, dadurch gekennzeichnet, dass das Spreizelement (7; 27; 37; 47) eine im wesentlichen zylindrische Aussenkontur aufweist, wobei der Aussendurchmesser (d) des Spreizelements (7; 27; 37; 47) etwa 0,5 mm bis etwa 1,5 mm grösser ist als der Durchmesser (s) der Durchgangsbohrung im Spreizbereich (4; 24; 34; 44).

5. Spreizdübel nach einem der Ansprüche 3 oder 4, dadurch gekennzeichnet, dass die Durchgangsbohrung (46) im Spreizbereich (44) in Setzrichtung verjüngt ausgebildet ist, wobei die Verjüngung der Durchgangsbohrung (46) vorzugsweise durch Prägen der gefalteten Abschnitte des Blechstanzbiegeteils erfolgt.

6. Spreizdübel nach einem der Ansprüche 1 - 3, dadurch gekennzeichnet, dass das Spreizelement (47) wenigstens bereichsweise eine sich in Setzrichtung konisch verjüngende Aussenkontur (50) aufweist.

7. Spreizdübel nach einem der vorangehenden Ansprüche, dadurch gekennzeichnet, dass am Übergang vom rückwärtigen Abschnitt zum Spreizbereich (44) des Dübelkörpers (41) in der Durchgangsbohrung (46) eine im wesentlichen trichterförmige Schlupffase (51) für das Spreizelement (47) vorgesehen ist.

8. Spreizdübel nach einem der vorangehenden Ansprüche, dadurch gekennzeichnet, dass das Spreizelement (7; 37; 47) an seiner den Lastangriffsmitteln (3; 33; 43) zugewandten Seite einen mittig abragenden Zapfen (8; 38; 48) aufweist.

9. Spreizdübel nach einem der vorangehenden Ansprüche, dadurch gekennzeichnet, dass der Dübelkörper (31) im Spreizbereich (34) eine im wesentlichen dreieckige Aussenkontur mit konvex gekrümmten Aussenseiten aufweist und durch drei axiale Schlitze (35) in drei Spreizabschnitte (10) geteilt ist.

10. Spreizdübel nach einem der vorangehenden Ansprüche, dadurch gekennzeichnet, dass die axiale Länge (x) des Spreizelements (7; 27; 37; 47) der Gesamtlänge (1) des Dübelkörpers (1; 21; 31; 41) vermindert um die axiale Erstreckung (y) des als Innengewinde (3; 23; 33; 43) geformten Lastangriffsmittels, entspricht.

## Claims

1. Expansion dowel, in particular percussion expansion dowel, comprising a sleeveshaped dowel body (1; 21; 31; 41) with a throughbore (6) and which has an expansion area (4; 24; 34; 44) with longitudinal slots (5; 25; 35; 45) and which comprises at its rearward section (2; 22; 32; 42) opposite the expansion area (4; 24; 34; 44) load engaging means (3; 23; 33; 43), preferably in inside thread, and an expansion element (7; 27; 37; 47) which is held and axially displaceable in the throughbore (6; 26; 36; 46) whilst radially expanding the expansion area (4; 24; 34; 44), and the expansion element (7; 27; 37; 47) is a punched sheet metal element (11; 12a; 13a), **characterised in that** the punched sheet metal element (11; 12a; 13a) is rolled into a compact body and at least sectionally oversized relative to the throughbore (6; 26; 36; 46) in the expansion area (4; 24; 34; 44).

2. Expansion dowel according to Claim 1, **characterised in that** the expansion element (27; 37; 47) is integrated with the sleeveshaped dowel body (21; 31; 41), and the expansion element (27; 37; 47) and the dowel body (21; 31; 41) are composed of associated flexible punched sheet metal elements (12a, 12b; 13a, 13b), and in the connecting area is arranged a nominal breaking point (29; 39; 49).

3. Expansion dowel according to Claim 2, **characterised in that** the sleeveshaped dowel body (21; 31; 41) has, by way of folding the flexural punched sheet metal element (11b, 12b) in the expansion area (24; 34; 44) a greater wall thickness (t) than in the rearward section (22; 32; 42), and the diameter (s) of the throughbore (26; 36; 46) in the expansion area (24; 34; 44) is reduced relative to the inside diameter (r) in the rearward section (22; 32; 42) of the dowel body (21; 31; 41).

4. Expansion dowel according to one of the above claims, **characterised in that** the expansion element (7; 27; 37; 47) has a substantially cylindrical outside contour, and the outside diameter (d) of the expansion element (7; 27; 37; 47) is larger by between approximately 0.5 mm and approximately 1.5 mm than the diameter (s) of the throughbore in the expansion area (4; 24; 34; 44).

5. Expansion dowel according to one of Claims 3 or 4,
**characterised in that** the throughbore (46) is designed to narrow in the expansion area (44) in the setting direction, and the narrowing of the throughbore (46) is preferably achieved by embossing th folded sections of the flexural punched sheet metal element.

6. Expansion dowel according to one of Claims 1 - 3,
**characterised in that** the expansion element (47) has at least sectionally an outside contour (50) which narrows in the setting direction.

7. Expansion dowel according to one of the above claims,
**characterised in that** in the transitional area from the rearward section to the expansion area (44) of the dowel body (41) a substantially funnelshaped slip phase (51) for the expansion element (47) is provided in the throughbore (46).

8. Expansion dowel according to one of the above claims,
**characterised in that** the expansion element (7; ;37; 47) comprises at its side facing towards the load engaging means (3; 33; 43) a centrally projecting pin (8; 38; 48).

9. Expansion dowel according to one of the above claims,
**characterised in that** the dowel body (31) comprises in the expansion area (34) a substantially triangular outside contour with convex curved outsides and is divided by three axial slots (35) into three expansion sections (10).

10. Expansion dowel according to one of the above claims,
**characterised in that** the axial length (x) of the expansion element (7; 27; 37; 47) corresponds with the total length (I) of the dowel body (1; 21; 31; 41) reduced by the axial extent (y) of the load engaging means in the shape of an inside thread (3; 23; 33; 43).

## Revendications

1. Cheville à expansion, en particulier cheville à expansion à frapper, comprenant un corps de cheville en forme de manchon (1 ; 21 ; 31 ; 41) qui est pourvu d'un trou débouchant (6), qui possède une zone d'expansion (4 ; 24 ; 34 ; 44) munie de fentes longitudinales (5 ; 25 ; 35 ; 45) et qui comporte des moyens d'application de charge (3 ; 23 ; 33 ; 43), de préférence un taraudage, sur sa portion arrière (2 ; 22 ; 32 ; 42) située à l'opposé de la zone d'expansion (4 ; 24 ; 34 ; 44), et comprenant un élément d'expansion (7 ; 27 ; 37 ; 47) qui est maintenu dans le trou débouchant (6 ; 26 ; 36 ; 46) et est apte à se déplacer axialement dans le trou débouchant (6 ; 26 ; 36 ; 46) en élargissant radialement la zone d'expansion (4 ; 24 ; 34 ; 44), l'élément d'expansion (7 ; 27 ; 37 ; 47) étant une pièce cintrée en tôle découpée (11 ; 12a ; 13a), caractérisée en ce que la pièce cintrée en tôle découpée (11 ; 12a ; 13a) est roulée sous la forme d'un corps compact et présente au moins par endroits une surmesure par rapport au trou débouchant (6 ; 26 ; 36 ; 46) ménagé dans la zone d'expansion (4 ; 24 ; 34 ; 44).

2. Cheville à expansion selon la revendication 1, caractérisée en ce que l'élément d'expansion (27 ; 37 ; 47) est réalisé d'un seul tenant avec le corps de cheville en forme de manchon (21 ; 31 ; 41), l'élément d'expansion (27 ; 37 ; 47) et le corps de cheville (21 ; 31 ; 41) étant constitués par des pièces cintrées solidaires en tôle découpée (12a, 12b ; 13a, 13b), et un emplacement de rupture imposée (29 ; 39 ; 49) étant disposé dans la zone de liaison.

3. Cheville à expansion selon la revendication 2, caractérisée en ce qu'en raison du pliage de la pièce cintrée en tôle découpée (llb ; 12b) le corps de cheville en forme de manchon (21 ; 31 ; 41) présente une épaisseur de paroi (t) plus grande dans la zone d'expansion (24 ; 34 ; 44) que dans la portion arrière (22 ; 32 ; 42), le diamètre (s) du trou débouchant dans la zone d'expansion (24 ; 34 ; 44) étant réduit par rapport au diamètre intérieur (r) dans la portion arrière (22 ; 32 ; 42) du corps de cheville (21 ; 31 ; 41).

4. Cheville à expansion selon une des revendications précédentes, caractérisée en ce que l'élément d'expansion (7 ; 27 ; 37 ; 47) présente un contour extérieur sensiblement cylindrique, le diamètre extérieur (d) de l'élément d'expansion (7 ; 27 ; 37 ; 47) étant plus grand d'environ 0,5 mm à environ 1,5 mm que le diamètre (s) du trou débouchant dans la zone d'expansion (4 ; 24 ; 34 ; 44).

5. Cheville à expansion selon l'une des revendications 3 ou 4, caractérisée en ce que le trou débouchant (46) ménagé dans la zone d'expansion (44) est rétréci dans le sens d'enfoncement, le rétrécissement du trou débouchant (46) étant obtenu de préférence par matriçage des portions repliées de la pièce cintrée en tôle découpée.

6. Cheville à expansion selon l'une des revendications 1 à 3, caractérisée en ce que l'élément d'expansion (47) comporte au moins par endroits un contour extérieur (50) rétréci sous forme conique dans le sens d'enfoncement.

7. Cheville à expansion selon une des revendications précédentes, caractérisée en ce qu'un chanfrein de glissement sensiblement en forme d'entonnoir (51) pour l'élément d'expansion (47) est prévu au niveau de la transition entre la portion arrière et la zone d'expansion (44) du corps de cheville (41) dans le trou débouchant (46).

8. Cheville à expansion selon une des revendications précédentes, caractérisée en ce que l'élément d'expansion (7 ; 37 ; 47) comporte un talon (8 ; 38 ; 48) qui dépasse en position centrale sur son côté tourné vers les moyens d'application de charge (3 ; 33 ; 43).

9. Cheville à expansion selon une des revendications précédentes, caractérisée en ce que le corps de cheville (31) présente, dans la zone d'expansion (34), un contour extérieur sensiblement triangulaire avec des côtés extérieurs à courbure convexe et est divisé en trois portions d'expansion (10) par trois fentes axiales (35).

10. Cheville à expansion selon une des revendications précédentes, caractérisée en ce que la longueur axiale (x) de l'élément d'expansion (7 ; 27 ; 37 ; 47) correspond à la longueur totale (1) du corps de cheville (1 ; 21 ; 31 ; 41), minorée de l'extension axiale (y) du moyen d'application de charge configuré en taraudage (3 ; 23 ; 33 ; 43).
